# EUROPEAN PATENT APPLICATION

(11) **EP 1 952 728 A1**
(43) Date of publication of application: **06.08.2008**
(21) Application number: 08100882.3
(22) Date of filing: 24.01.2008
(51) Int. Cl.: A47D 1/02, A47D 13/00, A47D 11/00

(54) **Child's play gym, also usable as a seat**

(30) Priority: 31.01.2007 IT MI20070028 U
(71) Applicant: ARTSANA S.p.A., 22070 Grandate (Como) (IT)
(72) Inventor: Catelli, Francesco, 22100, Como (IT)
(74) Representative: Ripamonti, Enrico

(57) **Abstract**

A child's play gym (1) comprising a base (2) to be positioned on a support surface (P), said base (2) having a perimetral frame (3) connected to an arched element (6) carrying games (11) and able to be disposed in at least one working position in which it lies above the base (2), this latter preferably presenting a flat element (4) connected to the perimetral frame (3). Said perimetral frame (3) comprises a first portion (12) and a second portion (13) hinged together and inclinable relative to each other, the flat element (4) being connected to at least a first (12) of said portions (12, 13), to act as a backrest for supporting a child when said first portion (12) is inclined to the second (13), the play gym being able to act as a seat when in that configuration.

## Description

The present invention relates to a child's play gym, in accordance with the introduction to the main claim.

A play gym is a known child product used to enable the child to activate various sensorial functions by the use of toys. In particular, said play gym comprises a base to be positioned on a support surface and having a perimetral frame. This frame preferably supports a flat filling element (or flexible element such as a padded fabric) on which a child is placed. With the perimetral frame there is also associated an arched member able to rotate about articulated joints connecting it to the frame, to enable it to be positioned in at least one working (or use) position in which it lies above the base (or above the flat element of this latter). The arched member supports toys enabling the child lying on the base to carry out play activities while at the same time preferably developing its sensorial activities: in this case, said toys often comprise movable and/or sound-emitting coloured elements to draw the attention of the child and enable it to actively intervene in handling the toys themselves.

The play gym usually presents a flat or substantially flat base (at most slightly curved to follow, by rocking, the natural movements of the child lying on it). Known play gyms do not usually enable a child to assume a reclined position in which it is supported during play, or to sleep while playing.

An object of the present invention is to provide a play gym which can also act as a seat both to support the child with its back raised during play and to enable it to sleep in that position.

A particular object of the invention is to provide a play gym of the stated type which is simple to use both in itself and as a seat, and easy to carry, and which enables various back support positions to be obtained for the child when the play gym is used as a seat.

A further object is to provide a play gym of the stated type which is of simple and low-cost construction while being able to perform two quite distinct functions (play gym and seat).

These and further objects which will be apparent to the expert of the art are attained by a play gym in accordance with the accompanying claims.

The present invention will be more apparent from the accompanying drawings, which are provided by way of non-limiting example and in which:
Figure 1 is a perspective side view of a play gym of the invention in its use position;
Figure 2 is a left side view of a part of the play gym of Figure 1;
Figures 3 to 6 show various working configurations or positions of the play gym, the outline of a child also being generically defined in said figures; and
Figure 7 is an exploded detailed view of a part of the play gym of Figure 1.

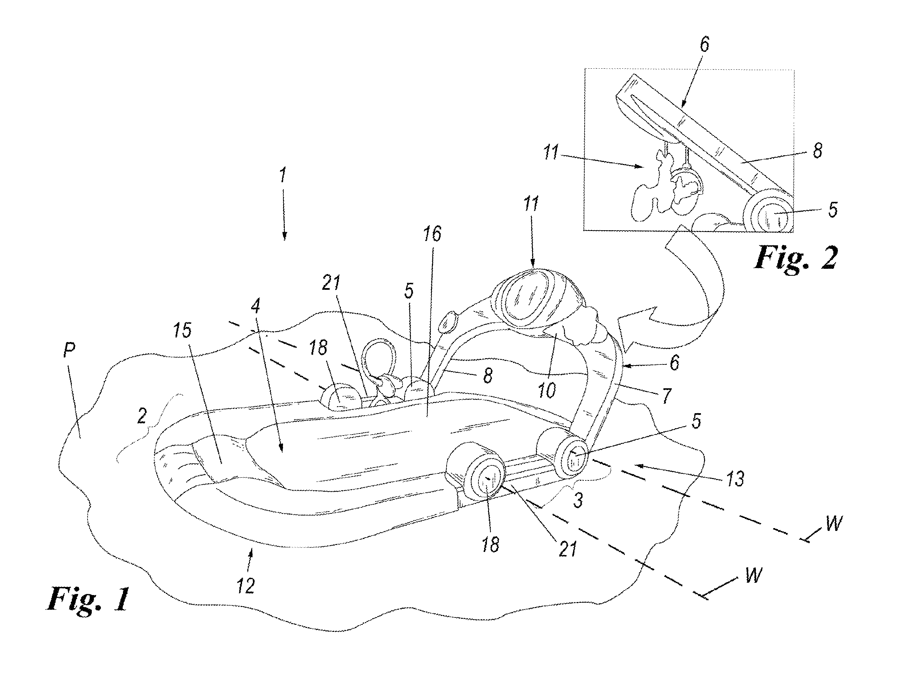

With reference to said figures, a play gym is indicated overall by 1 and comprises a base 2 bounded by a perimetral frame 3. A flat element 4 is associated with this frame, as is, by means of first articulated joints 5, an arched element 6 having arms 7 and 8 connected to the articulated joints 5 and to a central part 10, which is integral with the arms 7 and 8 and presents toys 11. This element can assume at least one working position in which it lies above the base 2, as shown in Figures 1, 5 and 6.

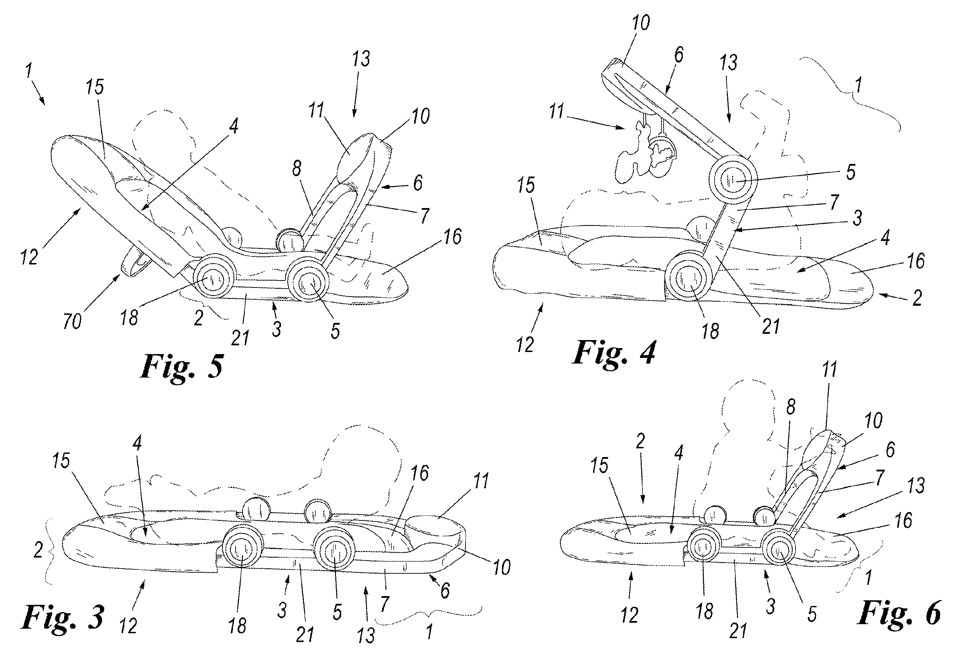

The frame comprises at least a first portion 12 and a second portion 13 connected together by second articulated joints 18 and able to be moved relative to each other about a hinging axis W, to be positioned in at least one and preferably a plurality of relatively inclined positions. This enables the play gym to be configured as a seat (Figure 5). The hinging axis also comprises that connecting the arched element 6 to the frame 3.

More specifically, the first portion 12 of the frame 3 supports the flat element 4, which is preferably of fabric and removably drawn over said portion. The element 4 is padded at least on a first part 15 thereof disposed on said portion. In contrast, the second portion 13 comprises first arms 21 disposed between the articulated joints 5 and 18 so that they pivot about this latter, as does also the arched element 6, which for all purposes can be considered a part of said second portion 13. This latter is preferably not rigid with any fixed element, in order to enable it to move relative to the first portion. The second portion 13 surrounds a second part 16 of the flat element 4 which extends between the arms 21, and beyond them as far as a point in which the arched element 6 can be positioned when disposed with its arms 7 and 8 coplanar with the aforesaid arms 21 and with the first portion 12 of the play gym (see Figure 3).

Each articulated joint 5 and 18 is shaped to enable the portions of the frame 3 and of the arched element 6 to assume different inclined positions relative to the adjacent portions or parts of the play gym 1, while at the same time also safely supporting, at least initially, the weight of a child (shown schematically in the figures) resting on it both during play and during possible sleep.

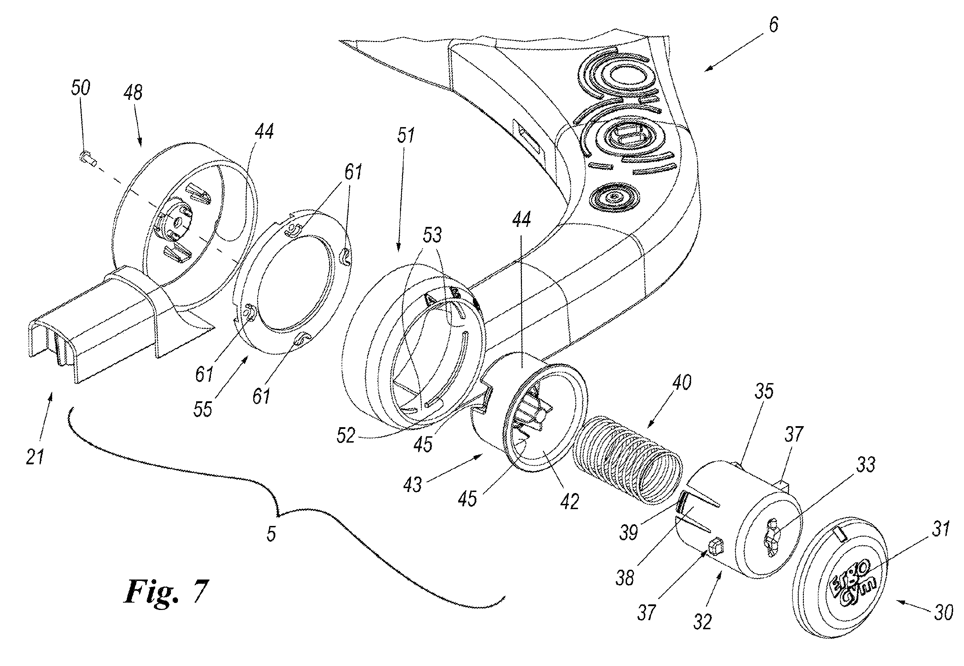

Specifically, each articulated joint 5 and 18 is shaped as shown in Figure 7. Each presents a pushbutton 30 comprising a substantially discoidal element 31 associated with a cup-shaped element 32 having a base 33 (with which the element 31 is associated in any known manner), from the edges of which there extends a cylindrical wall 35. This latter presents lugs 37 projecting perpendicularly from said wall, and elastic vanes 38 disposed along said wall, these vanes having their ends 39 bent to project externally from the cylindrical part.

A compression spring 40 is disposed within the cup-shaped element 32 about a ribbed pin 42 positioned centrally in a cup-shaped flanged part 43 receiving the element 32. This part has a base from which the pin 42 (holding the spring 40) projects and a wall 44 with slits 45 to receive the projecting vanes 38 and to enable the cup-shaped element 32 to move within the part 43. The ends 39 of said vanes 38 block movement of the element 32, urged by the spring 40, away from the base of the part 43 during the return of the pushbutton 30 after it has been pressed to allow relative movement of the portions of the frame 2.

In this respect, the part 43 is fixed (by screws 50) to a seat 44 provided in an end 48 of the first portion 12 of the frame 2, and is movable, by pressing the pushbutton 30 or element 32 against the spring 40 and rotating about the hinging axis W, within an annular part 51 associated with the second portion 13 of the frame 2 (in the case of the articulated joint 18) or with the arched element 6 (in the case of the articulated joint 5). The part 43 is rotated by being dragged by the vanes 38 of the element 32.

The member 51 presents internally a flange 52 in which a plurality of recesses 53 are provided to receive the lugs 37 of the cup-shaped element 32, to define various relative stable positions between said portions 12 and 13 or between the arms 21 and the arched element 6.

Within the member 51 an annular part 55 is provided to rest via distributed projections 61 against the flange 52 of the member 51, to create between the parts a space within which the lugs 37 of the element 32 can move. It should be noted that by this movement of the lugs 37 (essentially due to the rotation of the pushbutton about an axis perpendicular to the end 48 of the portion 12 or of the arms 21), these latter are urged by the spring 40 against the flange 52 of the member 51; in this manner, after pressing the pushbutton 30 towards the end 48 of the arm 21, when the lugs encounter a corresponding recess 53, as a result of the relative rotation between the arm 21 and the element 6, they automatically penetrate into it to lock the pushbutton (and hence the portion 12 and the arm 21) in a specific position, hence locking the position of this portion or arm relative to the adjacent part of the frame 2. Because of the presence of these lugs and their cooperation with the recesses 53, relative locking between the parts is obtained such as to ensure that they are maintained in their angled position. In the case of the portion 12, to ensure that this position is maintained and that the child is correctly and safely supported such as to enable the play gym to be used as a seat, a resting element 70 is advantageously provided (Figure 5) to the rear of the base 2 (to rest on any surface P, such as a floor) hinged in any known manner to the portion 12 of the frame 3, to enable it to be folded onto the base 2 when this portion is to rest on the surface P, when the play gym is used as such (Figures 1, 3, 4 and 6).

The use of the invention is apparent in the light of the aforegoing description and will therefore not be further described.

Other embodiments of the invention are possible, such as that comprising a single articulated joint 5 between the various parts of the play gym frame 3 (as stated, the arched element 6 can be considered a part of this frame) or a plurality of articulated joints (more than two, to enable the arched element 6 to assume a plurality of positions above the child) connecting together the various parts or arms of the frame 3 (the portion 12 or first portion of this latter remains that to which the flat element 4 is fixed). These embodiments are also to be considered as falling within the scope of the following claims.

The invention is simple to use and can be used in various configurations (see Figures 3-6) to enable a child to play during its different growth stages, from one month onwards; it can also be used to enable the child to rest if falling asleep while playing, and is easily transported, it being sufficient to fold the portion 12 of the frame 3 onto the portion 13 (defined by the coplanar arms 21 element 6), to be able to easily transport the assembly in folded form.

## Claims

1. A child's play gym (1) comprising a base (2) to be positioned on a support surface (P), said base (2) having a perimetral frame (3) connected to an arched element (6) carrying games (11) and able to be disposed in at least one working position in which it lies above the base (2), this latter preferably presenting a flat element (4) connected to the perimetral frame (3), **characterised in that** said perimetral frame (3) comprises a first portion (12) and a second portion (13) hinged together and inclinable relative to each other, the flat element (4) being connected to at least a first (12) of said portions (12, 13), to act as a backrest for supporting a child when said first portion (12) is inclined to the second (13), the play gym being able to act as a seat when **in that** configuration.

2. A play gym as claimed in claim 1, **characterised in that** the second portion (13) comprises the arched element (6).

3. A play gym as claimed in claim 1, **characterised in that** the second portion (13) comprises a plurality of parts (21, 6) hinged together.

4. A play gym as claimed in claim 1, **characterised in that** the hinged portions (12, 13) are connected together by articulated joints (5, 18) enabling these portions (12, 13) to achieve and maintain positions inclined relative to each other.

5. A play gym as claimed in claim 4, **characterised in that** each articulated joint comprises a pushbutton (30) movable against an elastic element (40) along an axis perpendicular to end portions (48, 51) of the hinged portions (6, 12, 13, 21) of the frame (3).

6. A play gym as claimed in claim 5, **characterised in that** the pushbutton (30) comprises a cup-shaped element (32) provided with projecting lugs (37) arranged to cooperate with seats (52) provided in an annular end portion (51) of one (6) of the hinged portions (6, 12, 13, 21) of the frame (3) such as to define working positions of that portion relative to the adjacent portion, said cup-shaped element (32) being rigid with, but axially movable within, a cup-shaped part (43) rigid with the end portion (48) of the other (12, 21) of the hinged portions (6, 12, 13, 21) of the frame (3), said cup-shaped element moving against the elastic element (40) contained within it and within the cup-shaped part (43).

7. A play gym as claimed in claim 6, **characterised in that** the cup-shaped part (43) is torsionally rigid with the cup-shaped element (32) by means of elastically movable vanes (38) of this latter inserted into corresponding seats (45) of said part (43).

8. A play gym as claimed in claim 6, **characterised in that** the seats (53) of said annular end portion (51) are provided in a flange (52) formed on the inside of said portion (51), an annular part (55) resting on, but spaced from, this latter, the lugs projecting from the cup-shaped element (32) of the pushbutton (30) being relatively movable between this part and said flange when there is relative movement between the portions (6, 12, 13, 21) of said frame.

9. A play gym as claimed in claim 1, **characterised by** comprising a resting element (70) hinged to said perimetral frame (3), to support the first portion (12) of this latter when in its position inclined to the second portion (13).
